# FASCICULE DE BREVET EUROPEEN

(11) **EP 4 313 643 B1**
(45) Date de publication et mention de la délivrance du brevet: **10.06.2026**
(21) Numéro de dépôt: 22707809.4
(22) Date de dépôt: 09.02.2022
(51) Int. Cl.: B60H 1/32

(54) **DISPOSITIF DE CLIMATISATION RÉVERSIBLE POUR VÉHICULE AUTOMOBILE ET PROCÉDÉ DE FONCTIONNEMENT D'UN TEL DISPOSITIF**
UMKEHRBARE KLIMATISIERUNGSVORRICHTUNG FÜR EIN KRAFTFAHRZEUG UND VERFAHREN ZUM BETRIEB SOLCH EINER VORRICHTUNG
REVERSIBLE AIR CONDITIONING DEVICE FOR A MOTOR VEHICLE AND METHOD FOR OPERATING SUCH A DEVICE

(30) Priorité: 23.03.2021 FR 2102895
(43) Date de publication de la demande: 07.02.2024
(73) Titulaire: Stellantis Auto SAS, 78300 Poissy (FR)
(72) Inventeur: CALMELS, David, 78860 ST NOM LA BRETECHE (FR); ROUF, Hugo, 14150 OUISTREHAM (FR); VUILLAUME, Pauline, 92100 BOULOGNE BILLANCOURT (FR); EL SOSSA, Benachir, 91130 RIS ORANGIS (FR)
(74) Mandataire: BCIP
(86) Numéro de dépôt international: PCT/FR2022/050239
(87) Numéro de publication internationale: WO 2022/200698

(56) Documents cités:
- GB-A- 2 571 111
- US-A- 6 003 325
- US-A1- 2012 117 993
- US-B2- 10 391 833

## Description

La présente invention revendique la priorité de la demande française 2102628 déposée le 16 mars 2021.

L'invention se rapporte au domaine de la climatisation des véhicules automobiles d'une manière générale, et notamment des véhicules automobiles à motorisation électrique et/ou de ceux à motorisation thermique, comme par exemple les véhicules à propulsion hybride thermique/électrique.

La climatisation est un élément de confort de plus en plus souvent installé dans les véhicules automobiles. De manière connue, un dispositif de climatisation pour véhicule automobile comporte quatre éléments principaux : un compresseur, un condenseur, un détendeur, et un évaporateur. Ces quatre éléments sont disposés au sein d'un circuit fermé dans lequel circule un fluide réfrigérant (ou fluide caloporteur ou frigorigène). Certains véhicules comportent des dispositifs permettant d'assurer à la fois la climatisation (ou le refroidissement) et le chauffage de l'habitacle. Dans ces dispositifs, certains éléments ont une double fonction. Il comprend par exemple deux échangeurs de chaleur qui joueront alternativement le rôle de condenseur ou d'évaporateur selon que le dispositif fonctionne en mode climatisation ou en mode chauffage.

Par exemple, le document FR3079919 décrit un dispositif de climatisation réversible permettant de réduire la surconsommation due à un compresseur mécanique dans le cas d'un moteur thermique et la perte d'autonomie dans le cas d'un véhicule électrique ou hybride, et qui soit apte à fonctionner, dans le cas d'un véhicule équipé d'un moteur thermique, même lorsque le moteur est momentanément arrêté. Ce dispositif donne également d'excellents résultats mais engendrent des coûts importants en équipement pour le véhicule qui le reçoit.

Le document US 2012/117993 décrit un procédé de gestion d'un dispositif de climatisation réversible pour véhicule, le dispositif étant configuré pour fonctionner selon un mode de refroidissement ou alternativement de chauffage.

Il est courant que dans les dispositifs de climatisation réversible, le fluide réfrigérant va tourner dans deux boucles ou sous-circuits distincts comprenant les éléments en commun selon des sens de circulation différents selon qu'il circule dans le sous-circuit (ou boucle) de chauffage, ou dans le sous-circuit (ou boucle) de refroidissement. Un des problèmes rencontrés alors est de protéger le compresseur contre l'ingestion de fluide réfrigérant à l'état liquide.

L'invention a pour objectif de répondre à au moins un des avantages et inconvénients rencontrés dans l'art antérieur en proposant un dispositif de climatisation réversible et un procédé de mise en œuvre d'un tel dispositif dans lequel le compresseur est protégé de l'ingestion de fluide réfrigérant sous forme liquide lors du basculement d'un mode de fonctionnement à un autre.

A cet effet et selon un premier aspect, l'invention a pour objet un procédé de gestion d'un dispositif de climatisation réversible pour véhicule automobile, le dispositif étant configuré pour fonctionner alternativement selon un mode refroidissement dans lequel un fluide réfrigérant circule selon un sens donné dans un sous-circuit de refroidissement ou selon un mode chauffage dans lequel un fluide réfrigérant circule en sens inverse et dans un sous-circuit de chauffage, le dispositif comprenant un échangeur de chaleur extérieur, un échangeur de chaleur intérieur, au moins un compresseur et au moins un détendeur monté entre l'échangeur de chaleur extérieur et l'échangeur de chaleur intérieur ; le procédé étant remarquable en ce qu'en réponse à une commande d'activation du dispositif selon au moins un des modes de fonctionnement, il comprend les étapes suivantes une étape d'activation du compresseur ; une étape de fermeture du ou des détendeurs ; et une étape de mesure de la surchauffe du fluide réfrigérant en entrée du compresseur et comparaison de la valeur mesurée à une valeur cible de surchauffe et ouverture dudit au moins un détendeur lorsque la valeur de surchauffe mesurée est supérieure ou égale à la valeur cible de surchauffe.

Comme on l'aura compris à la lecture de la définition qui vient d'en être donnée, l'invention consiste à incorporer un temps de latence entre le moment où le dispositif est actionné selon un mode donné (pare exemple, en mode chauffage) et le moment où le compresseur est mis en marche. Ce temps de latence est choisi pour être suffisant pour que le fluide réfrigérant présent dans le réservoir correspondant au sous circuit de l'autre mode de fonctionnement (par exemple le premier réservoir) soit complètement évaporé, c'est-à-dire sous forme gazeuse. La détermination de ce temps de latence se fait par un calcul de la surchauffe mesurée en entrée du compresseur. Le compresseur est ainsi protégé contre l'ingestion de liquide.

De manière préférentielle, le procédé est mis en œuvre en réponse à une commande d'activation du dispositif en mode chauffage. L'invention est remarquable car elle permet de protéger le compresseur sans avoir à ajouter d'éléments dans le circuit ; par exemple, sans avoir à ajouter de vanne en sortie du premier réservoir. En effet, lorsque le dispositif de climatisation réversible est actionné avec une commande de fonctionnement en mode chauffage, le fluide réfrigérant sous forme liquide et contenu dans le premier réservoir disposé dans le sous-circuit de refroidissement va être aspiré par le compresseur. Il est important que celui-ci soit sous forme gazeuse avant de passer dans le compresseur.

Selon un mode de réalisation préféré, le procédé comprend en outre une étape d'activation d'un ventilateur apte à créer un flux d'air additionnel au niveau de l'échangeur de chaleur disposé en amont du compresseur selon le sens de circulation du fluide réfrigérant associé au mode de fonctionnement activé.

Par exemple, le procédé est mis en œuvre en réponse à une commande d'activation du dispositif en mode chauffage et le ventilateur activé est un groupe moto-ventilateur disposé au niveau de la face avant du véhicule.

De préférence, l'étape d'activation d'un ventilateur est réalisée avant l'étape d'activation du compresseur ; et/ou en ce que l'étape d'activation d'un ventilateur est réalisée lorsque le véhicule roule à une vitesse inférieure à une vitesse prédéterminée.

Selon un mode préféré de réalisation de l'invention, en réponse à une commande d'activation du dispositif selon au moins un des modes de fonctionnement, le procédé comprend une mesure préliminaire de la surchauffe du fluide réfrigérant en entrée du compresseur et commande l'étape de fermeture du ou des détendeurs si la valeur de surchauffe est inférieure à la valeur cible de surchauffe.

De préférence, la valeur cible de surchauffe est d'au moins 4 K, plus préférablement égale ou supérieure à 5 K.

De manière avantageuse, le procédé est mis en œuvre en réponse à une commande d'activation du dispositif selon au moins un des modes de fonctionnement si ladite commande d'activation correspond à un changement de mode de fonctionnement depuis le mode refroidissement vers le mode chauffage ou depuis le mode chauffage vers le mode refroidissement. En d'autres termes, l'homme du métier aura un avantage particulier à mettre en œuvre le procédé en cas d'inversion du sens de circulation du fluide réfrigérant.

Selon un deuxième aspect, l'invention a pour objet un véhicule automobile remarquable en ce qu'il comprend un dispositif de climatisation réversible configuré pour fonctionner alternativement selon un mode refroidissement dans lequel un fluide réfrigérant circule selon un sens donné dans un sous-circuit de refroidissement ou selon un mode chauffage dans lequel un fluide réfrigérant circule en sens inverse et dans un sous-circuit de chauffage, le dispositif comprenant un échangeur de chaleur extérieur, un échangeur de chaleur intérieur, au moins un compresseur et au moins un détendeur monté entre l'échangeur de chaleur extérieur et l'échangeur de chaleur intérieur ; et comprend en outre une unité de contrôle électronique associée audit dispositif et configurée pour mettre en œuvre le procédé selon le premier aspect.

De préférence, le véhicule comprend en outre une interface homme-machine pouvant être utilisée par l'utilisateur du véhicule pour commander l'activation du dispositif de climatisation réversible selon l'un de ses modes de fonctionnement.

Selon un mode de réalisation, le dispositif de climatisation réversible comprend un réservoir d'accumulation pour fluide réfrigérant disposé entre le ou un des détendeurs et l'échangeur de chaleur extérieur. De préférence, le dispositif comprend deux détendeurs montés en parallèle entre l'échangeur de chaleur extérieur et l'échangeur de chaleur intérieur ; un premier détendeur étant agencé pour être utilisé lorsque le dispositif fonctionne en mode refroidissement et un deuxième détendeur étant agencé pour être utilisé lorsque le dispositif fonctionne en mode chauffage ; et le dispositif comprend un réservoir disposé entre le premier détendeur et l'échangeur de chaleur extérieur.

Selon un mode de réalisation, le dispositif de climatisation réversible comprend un réservoir d'accumulation pour fluide réfrigérant disposé entre le ou un des détendeurs et l'échangeur de chaleur intérieur. De préférence, le dispositif comprend deux détendeurs montés en parallèle entre l'échangeur de chaleur extérieur et l'échangeur de chaleur intérieur ; un premier détendeur étant agencé pour être utilisé lorsque le dispositif fonctionne en mode refroidissement et un deuxième détendeur étant agencé pour être utilisé lorsque le dispositif fonctionne en mode chauffage ; et le dispositif comprend un réservoir disposé entre le deuxième détendeur et l'échangeur de chaleur intérieur.

Selon un mode de réalisation, le dispositif de climatisation réversible comprend un compresseur unique associé à quatre canalisations chacune étant pourvue d'une vanne de sorte à définir un sous-circuit de refroidissement et un sous-circuit de chauffage ; et/ou en ce qu'il comprend un détendeur unique pouvant être utilisé dans les deux sens de circulation du fluide réfrigérant et ledit détendeur étant commun au sous-circuit de chauffage et au sous-circuit de refroidissement.

L'invention sera bien comprise et d'autres aspects et avantages apparaîtront clairement à la lecture de la description qui suit donnée en référence à la planche de dessins annexée sur laquelle :
[Fig. 1] la figure 1 est une représentation schématique d'un dispositif de climatisation réversible tel que fonctionnant en mode refroidissement.
[Fig. 2] la figure 2 est une représentation schématique d'un dispositif de climatisation réversible tel que fonctionnant en mode chauffage.
[Fig. 3] la figure 3 est un diagramme temporel illustrant les différentes étapes s'enchaînant au moment de l'activation du dispositif de climatisation réversible en mode chauffage.

Dans la description qui suit, le terme « comprendre » est synonyme de « inclure » et n'est pas limitatif en ce qu'il autorise la présence d'autres éléments ou moyens dans le dispositif ou le véhicule auquel il se rapporte, ou d'autres étapes dans le procédé considéré. Il est entendu que le terme « comprendre » inclut les termes « consister en ». De même, les termes « intérieur », « extérieur », « avant », « arrière » s'entendront par rapport à l'orientation générale du véhicule tel que pris selon son sens normal de marche. Sur les différentes figures, les mêmes références désignent des éléments identiques ou similaires.

Dans la description qui suit, le procédé de gestion d'un dispositif de climatisation réversible, le dispositif de climatisation réversible et le véhicule comprenant un tel dispositif et mettant en œuvre un tel procédé seront décrits conjointement.

Selon un aspect, l'invention a pour objet un véhicule automobile remarquable en ce qu'il comprend un dispositif de climatisation réversible configuré pour fonctionner alternativement selon un mode refroidissement dans lequel un fluide réfrigérant circule selon un sens donné dans un sous-circuit de refroidissement ou selon un mode chauffage dans lequel un fluide réfrigérant circule en sens inverse et dans un sous-circuit de chauffage, le dispositif comprenant un échangeur de chaleur extérieur, un échangeur de chaleur intérieur, au moins un compresseur et au moins un détendeur monté entre l'échangeur de chaleur extérieur et l'échangeur de chaleur intérieur ; et comprend en outre une unité de contrôle électronique associée audit dispositif et configurée pour mettre en œuvre le procédé selon l'invention.

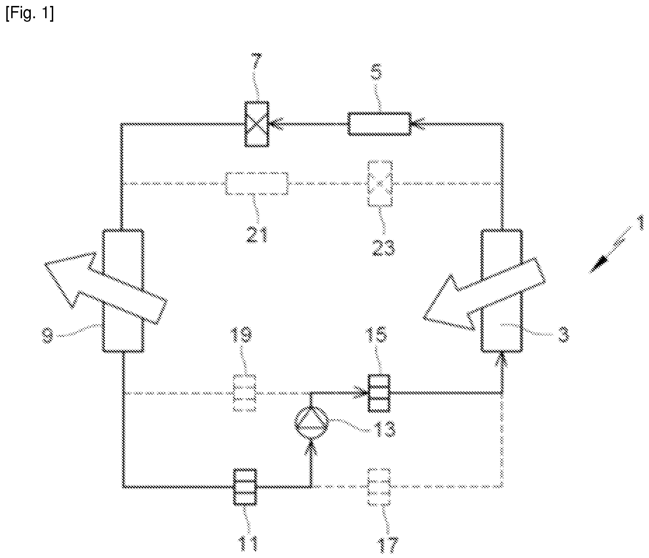

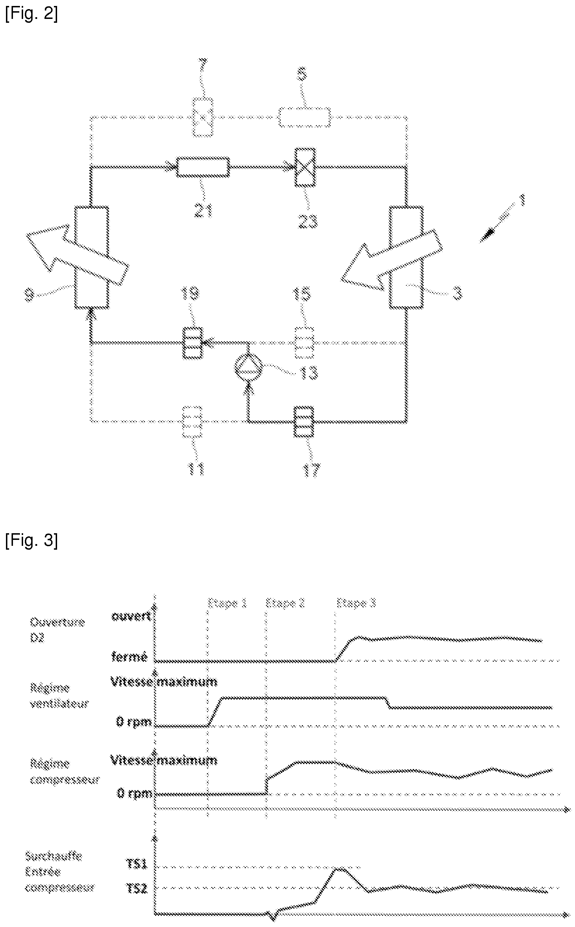

Le véhicule et le dispositif de climatisation réversible vont d'abord être décrits en référence aux figures 1 et 2 dans lesquelles le mode refroidissement est illustré en figure 1 et le mode chauffage est illustré en figure 2. Sur les deux figures, les éléments non utilisés par le mode de fonctionnement considéré (climatisation ou chauffage) sont représentés en pointillés.

La figure 1 illustre le dispositif fonctionnant en mode refroidissement de l'habitacle. Le compresseur 13 va assurer la circulation du fluide réfrigérant dans le circuit en aspirant ce fluide à l'état gazeux en provenance de l'échangeur de chaleur intérieur 9, le comprimer ce fluide et l'envoyer vers l'échangeur de chaleur extérieur 3, disposé au niveau de la face avant du véhicule et qui assure ici la fonction de condenseur. Le fluide arrive au niveau du condenseur sous forme de gaz à haute pression et haute température. Le condenseur est un échangeur de chaleur dans lequel le fluide réfrigérant passe de l'état gazeux à l'état liquide, étape durant laquelle le fluide cède une partie de sa chaleur, avant de passer dans le détendeur 7 (ici nommé le premier détendeur 7 car le circuit représenté en comprend deux). Le rôle du détendeur 7 est de faire chuter la pression, et donc la température du fluide réfrigérant. Un premier réservoir 5 d'accumulation est disposé en amont du premier détendeur 7. Le rôle du premier réservoir 5 (destiné à être utilisé en mode refroidissement) permet d'alimenter le premier détendeur 7 en fluide réfrigérant sous forme liquide de manière homogène et donc de maintenir constantes les performances du sous-circuit de refroidissement en amortissant les éventuelles variations d'approvisionnement en fluide réfrigérant.

Après son passage dans le premier détendeur 7, le fluide est entraîné jusqu'à l'échangeur de chaleur intérieur 9 disposé au niveau de l'habitacle de véhicule et qui assure ici la fonction d'évaporateur. L'évaporateur fait passer le fluide réfrigérant de l'état liquide à l'état gazeux. Durant ce changement de phase, le fluide réfrigérant absorbe la chaleur de l'air qui traverse l'évaporateur. L'air ainsi refroidi est envoyé vers l'habitacle au moyen d'un système de ventilation. En sortie d'évaporateur, le fluide réfrigérant est à l'état gazeux et est aspiré par le compresseur 13 de manière à entamer un nouveau cycle.

Lorsque le dispositif fonctionne en mode chauffage, comme illustré en figure 2, le sens de circulation du fluide réfrigérant est inversé par rapport au mode refroidissement. Ceci est rendu possible par la présence, par exemple, d'un ensemble de quatre vannes ON/OFF (11, 15, 17, 19) agencées en entrée et en sortie du compresseur. Ainsi, deux vannes ON/OFF sont disposées en sortie du compresseur 13, à savoir une première vanne ON/OFF 15 de sortie qui relie la sortie du compresseur 13 à l'échangeur de chaleur extérieur 3 et une deuxième vanne ON/OFF 19 de sortie qui relie la sortie du compresseur 13 à l'échangeur de chaleur intérieur 9. Deux vannes ON/OFF additionnelles sont disposées en entrée du compresseur 13, à savoir une première vanne ON/OFF 11 d'entrée qui relie l'échangeur de chaleur intérieur 9 à l'entrée du compresseur 13 et une deuxième vanne ON/OFF 17 d'entrée qui relie l'échangeur de chaleur extérieur 3 à l'entrée du compresseur 13. Lorsque le circuit fonctionne en mode refroidissement comme illustré en figure 1 les premières vannes d'entrée 11 et de sortie 15 sont ouvertes de manière à ce que le fluide réfrigérant soit dirigé vers l'échangeur de chaleur extérieur 3 après son passage dans le compresseur 13 et le premier détendeur 7 est actionné. Lorsque le circuit fonctionne en mode chauffage comme illustré en figure 2, les premières vannes sont fermées et les deuxièmes vannes d'entrée 17 et de sortie 19 sont ouvertes de manière à ce que le fluide réfrigérant soit dirigé vers l'échangeur de chaleur intérieur 9 après son passage dans le compresseur 13 et le deuxième détendeur 23 et actionné.

Lorsque le dispositif est utilisé en mode chauffage, le fluide réfrigérant est donc envoyé à l'état gazeux, comprimé et à haute température vers l'échangeur de chaleur intérieur 9 qui assure ici la fonction de condenseur. Le condenseur va chauffer l'air soufflé dans l'habitacle par échange thermique ce qui aura pour résultat de faire passer le réfrigérant de l'état gazeux à l'état liquide. Le fluide est entrainé vers le deuxième détendeur 23, qui est monté en parallèle du premier détendeur 7. On aura compris que lorsque le deuxième détendeur 23 est utilisé le premier détendeur 7 est fermé (ou inutilisé) et vice versa. Un deuxième réservoir 21 d'accumulation est disposé en amont du deuxième détendeur 23 Le deuxième détendeur 23 permet de faire chuter la pression, et donc la température du fluide réfrigérant. Le fluide est ensuite entraîné jusqu'à l'échangeur de chaleur extérieur 3 disposé au niveau de l'habitacle de véhicule et qui assure ici la fonction d'évaporateur. L'évaporateur permet de faire passer le fluide réfrigérant de l'état liquide à l'état gazeux. Durant ce changement de phase, le fluide réfrigérant absorbe la chaleur de l'air qui traverse l'évaporateur. En sortie d'évaporateur, le fluide réfrigérant à l'état gazeux est aspiré par le compresseur 13 et entame ainsi un nouveau cycle. Un des rôles du deuxième réservoir 21 est de stocker du fluide sous forme liquide de manière à laisser dans l'échangeur de chaleur intérieur 9 le minimum de liquide sous refroidi. Cette configuration permet donc d'avoir une température homogène au niveau du fluide dans l'échangeur de chaleur intérieur 9 et donc par conséquent au niveau de l'air soufflé dans l'habitacle.

On comprend que dans un tel dispositif le fluide réfrigérant va tourner dans deux boucles ou sous-circuits distincts comprenant les éléments en commun. En effet, l'inversion du sens de circulation par le compresseur associé à des détendeurs (7, 23) montés en parallèle défini dans un même circuit fermé, un sous-circuit (ou boucle) de chauffage, et un sous-circuit (ou boucle) de refroidissement.

Le dispositif de climatisation réversible est représenté sur les figures 1 et 2 selon un mode de réalisation selon lequel il comprend deux détendeurs (7, 23) montés en parallèle entre l'échangeur de chaleur extérieur 3 et l'échangeur de chaleur intérieur 9. Dans ce mode de réalisation un premier détendeur 7 est agencé pour être utilisé lorsque le dispositif fonctionne en mode refroidissement et un deuxième détendeur 23 est agencé pour être utilisé lorsque le dispositif fonctionne en mode chauffage. Néanmoins d'autres modes de réalisation sont possibles. Par exemple, dans un autre mode de réalisation no représenté, il comprend un seul détendeur pouvant être utilisé dans les deux sens de circulation du fluide réfrigérant.

Par exemple, dans le dispositif de climatisation réversible selon l'invention, la pression maximale de condensation dans le dispositif fonctionnant en mode chauffage est comprise entre 12 à 15 bars absolus (dont le zéro correspond au vide parfait) ; et la pression minimale d'évaporation dans le dispositif fonctionnant en mode chauffage est d'environ 1 bar absolu.

Enfin, le véhicule comprend en outre une unité de contrôle électronique (ECU) associée audit dispositif 1 et configurée pour mettre en œuvre le procédé qui va être décrit ci-dessous. On rappelle au besoin qu'une une unité de contrôle électronique (ECU) est un dispositif électronique intégré, qui lit les signaux provenant de capteurs placés dans différents endroits et dans différents composants de la voiture et, en fonction de ces informations peut commander ou contrôler différents éléments embarqués. Dans le cas présent, comme on va le voir, l'unité de contrôle électronique va lire des signaux en provenance d'au moins un capteur de température disposé en entrée du compresseur et va calculer une température de surchauffe qu'elle va ensuite comparer à une valeur cible ou seuil. En fonction du résultat de cette comparaison, l'unité de contrôle électronique va commander ou non l'activation du ou d'un des détendeurs du dispositif de climatisation réversible.

Les fonctions de commande du dispositif de climatisation réversible (par exemple, la fonction de commande d'activation du ou d'un des détendeurs) sont mises en œuvre par l'envoi d'instructions depuis l'unité de contrôle électronique aux différents éléments du dispositif 1 par exemple au moyen d'un réseau multiplexé embarqué sur le véhicule, ou par le biais d'un dispositif de pilotage qui est propre audit dispositif 1. L'unité de contrôle électronique va comprendre classiquement au moins une mémoire et au moins un calculateur. Le véhicule selon l'invention va donc comprendre un système électronique comprenant un sous-système de type « body domain » regroupant l'électronique de corps et de confort duquel fait partie le système associé à la climatisation et au chauffage.

On rappelle au besoin que les réseaux multiplexés sont des réseaux de communication numérique permettant à des équipements électriques ou des sous-ensembles d'équipements électriques de communiquer entre eux avec un nombre de fils réduit. La mise en œuvre de tels réseaux multiplexés sur un véhicule est connue de l'homme du métier et ne sera pas détaillée plus avant. A titre d'exemple, l'invention peut mettre en œuvre un réseau de type CAN (Controller Area Network), de type LIN (Local Interconnect Network), de type MOST (Media Oriented System Transport), de type SWC (Single wire CAN), de type HS-CAN (High Speed CAN), de type Flexray, de type Safe-by-wire, ou d'autres types de réseaux multiplexés.

Les fonctions d'actionnement du dispositif de climatisation réversible selon le mode chauffage et le mode de climatisation peuvent être automatisées et/ou actionnées manuellement par l'utilisateur du véhicule au moyen d'un bouton de commande manuelle disposé sur le tableau de bord ou d'une interface homme-machine. Ladite interface comprend classiquement un afficheur permettant à l'utilisateur de commander et/ou de paramétrer le dispositif. Différents types d'afficheurs peuvent être utilisés, par exemple des afficheurs à commande vocale ou comprenant un écran tactile.

Selon l'invention, le procédé de gestion d'un dispositif de climatisation réversible pour véhicule automobile est mis en œuvre automatiquement en réponse à une commande d'activation du dispositif selon au moins un des modes de fonctionnement que cette commande d'activation soit automatique ou fasse l'objet d'une intervention d'un des occupants du véhicule par le biais de l'interface homme-machine.

Le procédé selon l'invention comprend avantageusement les étapes suivantes : une étape d'activation du compresseur ou d'au moins un des compresseurs ; une étape de fermeture du ou des détendeurs ; et une étape de mesure de la surchauffe du fluide réfrigérant en entrée du compresseur et comparaison de la valeur mesurée à une valeur cible de surchauffe et ouverture du détendeur associé au mode de fonctionnement considéré lorsque la valeur de surchauffe mesurée est supérieure ou égale à la valeur cible de surchauffe.

Selon un mode de mise en œuvre de l'invention, les étapes d'activation du compresseur ou d'au moins un des compresseurs et de fermeture du ou des détendeurs se font successivement. Selon un mode de mise en œuvre de l'invention, les étapes d'activation du compresseur ou d'au moins un des compresseurs et de fermeture du ou des détendeurs se font simultanément.

Selon un mode de réalisation préféré, le procédé est mis en œuvre en réponse à une commande d'activation du dispositif en mode chauffage et/ ou en mode refroidissement ; de préférence en mode chauffage.

L'invention est remarquable car elle permet de protéger le compresseur sans avoir à ajouter d'éléments dans le circuit ; par exemple, sans avoir à ajouter de vanne en sortie du premier réservoir. En effet, lorsque le dispositif de climatisation réversible est actionné avec une commande de fonctionnement en mode chauffage, le fluide réfrigérant sous forme liquide et contenu dans le premier réservoir disposé dans le sous-circuit de refroidissement va être aspiré par le compresseur. Il est important que celui-ci soit sous forme gazeuse avant de passer dans le compresseur. L'invention est remarquable en ce qu'elle favorise le passage sous forme gazeuse du fluide réfrigérant d'une part en fermant le ou les détendeurs de sorte à ce que l'échangeur de chaleur extérieur 3 soit, durant ce temps de latence, intégralement dédié à la mise sous forme gazeuse du fluide contenu dans ledit réservoir. D'autre part, et de manière préférentielle, elle favorise le passage sous forme gazeuse du fluide réfrigérant en incluant une étape d'activation d'un ventilateur apte à créer un flux d'air additionnel au niveau de l'échangeur de chaleur disposé en amont du compresseur selon le sens de circulation du fluide réfrigérant associé au mode de fonctionnement activé.

Ainsi, lorsque le procédé est mis en œuvre en réponse à une commande d'activation du dispositif en mode chauffage et le ventilateur activé est un groupe moto-ventilateur disposé au niveau de la face avant du véhicule. De préférence, l'étape d'activation d'un ventilateur est réalisée avant l'étape d'activation du compresseur ; et/ou l'étape d'activation d'un ventilateur est réalisée lorsque le véhicule roule à une vitesse inférieure à une vitesse prédéterminée, c'est-à-dire quand le flux d'air généré par la vitesse du véhicule est insuffisant.

La surchauffe représente une augmentation de la température du fluide aspiré en sortie de l'évaporateur sans augmentation de la pression, c'est aussi ce qui détermine la bonne alimentation en fluide de l'évaporateur. La surchauffe représente la différence entre la température mesurée au niveau du détenteur et la température d'évaporation en entrée du compresseur. La température peut être mesurée par tout moyen connu de l'homme du métier comme par exemple un thermomètre ou une sonde.

De préférence, la valeur cible de surchauffe est d'au moins 4 K (ou 4°C), plus préférablement égale ou supérieure à 5 K (ou 5°C). Par exemple, la valeur cible de surchauffe est comprise entre 4 et 10 K (ou 4 et 10 °C), de préférence entre 5 et 8 K (ou 5 et 8 °C). Dans le contexte de l'invention, l'augmentation de la surchauffe mesurée est indicative de l'alimentation en fluide de l'évaporateur. Lorsque le réservoir en amont de l'évaporateur est vide car tout le fluide a été aspiré, l'évaporateur n'est plus assez alimenté en fluide et la valeur de surchauffe augmente. Il est temps d'ouvrir le détendeur.

De manière avantageuse, le procédé est mis en œuvre en réponse à une commande d'activation du dispositif selon au moins un des modes de fonctionnement si ladite commande d'activation correspond à un changement de mode de fonctionnement depuis le mode refroidissement vers le mode chauffage ou depuis le mode chauffage vers le mode refroidissement. En d'autres termes, l'homme du métier aura un avantage particulier à mettre en œuvre le procédé en cas d'inversion du sens de circulation du fluide réfrigérant.

Dans un mode de réalisation préféré de l'invention, en réponse à une commande d'activation du dispositif selon au moins un des modes de fonctionnement, le procédé comprend une mesure préliminaire de la surchauffe du fluide réfrigérant en entrée du compresseur et commande l'étape de fermeture du ou des détendeurs (7, 23) si la valeur de surchauffe est inférieure à valeur cible de surchauffe, par exemple inférieure à 5K (ou 5°C). Cette configuration permet de détecter la pertinence de la mise en œuvre d'un temps de latence au démarrage du procédé. En d'autres termes, la présence de fluide sous forme liquide dans le réservoir en amont de l'échangeur de chaleur jouant le rôle d'évaporateur est détectée par une surchauffe inférieure à la normale si bien qu'il convient de fermer temporairement le détendeur pour pallier ce problème et protéger le compresseur contre l'ingestion de liquide.

Ainsi selon une mise en œuvre de l'invention, le procédé comprend les étapes suivantes : une étape d'activation du dispositif selon le mode chauffage ; une étape optionnelle d'activation du groupe moto-ventilateur ; une étape d'activation du compresseur; et une étape de mesure de la surchauffe du fluide réfrigérant en entrée du compresseur et comparaison de la valeur mesurée à une valeur cible de surchauffe et ouverture du détendeur associé au mode de fonctionnement considéré lorsque la valeur de surchauffe mesurée est supérieure ou égale à la valeur cible de surchauffe.

Ainsi selon une autre mise en œuvre de l'invention, le procédé comprend les étapes suivantes : une étape d'activation du dispositif selon le mode chauffage ; une étape optionnelle d'activation du groupe moto-ventilateur ; une étape d'activation du compresseur ; une étape de mesure de la surchauffe en entrée du compresseur et comparaison de la valeur mesurée à une valeur cible de surchauffe et commande de la fermeture du ou des détendeurs alors que le compresseur est activé lorsque la valeur de surchauffe mesurée est inférieure à la valeur cible de surchauffe ; et une nouvelle étape de mesure de la surchauffe du fluide réfrigérant en entrée du compresseur et comparaison de la valeur mesurée à une valeur cible de surchauffe et ouverture du détendeur associé au mode de fonctionnement considéré lorsque la valeur de surchauffe mesurée est supérieure ou égale à la valeur cible de surchauffe.

La figure 3 illustre les différentes étapes qui s'enchaînent au moment de l'activation du dispositif de climatisation réversible en mode chauffage.

A l'état initial, le compresseur est arrêté et le ou les détendeurs sont ouverts. La pression est uniforme dans tout le circuit. Le premier réservoir est encore rempli de fluide réfrigérant sous forme liquide car avant l'arrêt du dispositif, le dispositif fonctionnait en mode refroidissement.

Dans un premier temps (première étape), le groupe moto-ventilateur (GMV) est activé de manière à créer un flux d'air extérieur au travers de l'échangeur extérieur en complément du flux d'air créé par la vitesse du véhicule.

Dans un deuxième temps (deuxième étape), le compresseur est activé alors que le ou les détendeurs sont fermés afin d'assécher le premier réservoir en aspirant le fluide qui s'évapore en passant par l'évaporateur.

Dans un troisième temps (troisième étape), le seuil de surchauffe TS1 qui garantit l'absence de liquide dans le réservoir est atteint. Ce seuil peut être déterminé expérimentalement ou une valeur au moins égale à 4 ou 5°C est choisie. Le détendeur associé au sous-circuit de chauffage est ouvert (noté « ouverture D2 » sur le diagramme) et le dispositif fonctionne normalement le seuil de surchauffe revient à sa valeur normale TS2.

## Revendications

1. Procédé de gestion d'un dispositif de climatisation réversible (1) pour véhicule automobile, le dispositif étant configuré pour fonctionner alternativement selon un mode refroidissement dans lequel un fluide réfrigérant circule selon un sens donné dans un sous-circuit de refroidissement ou selon un mode chauffage dans lequel un fluide réfrigérant circule en sens inverse et dans un sous-circuit de chauffage, le dispositif (1) comprenant un échangeur de chaleur extérieur (3), un échangeur de chaleur intérieur (9), au moins un compresseur (13) et au moins un détendeur (7, 23) monté entre l'échangeur de chaleur extérieur (3) et l'échangeur de chaleur intérieur (9); le procédé étant **caractérisé en ce qu'**en réponse à une commande d'activation du dispositif selon au moins un des modes de fonctionnement, il comprend les étapes suivantes : une étape d'activation du compresseur (13) ; une étape de fermeture du ou des détendeurs (7, 23) ; et une étape de mesure de la surchauffe du fluide réfrigérant en entrée du compresseur et comparaison de la valeur mesurée à une valeur cible de surchauffe et ouverture dudit au moins un détendeur lorsque la valeur de surchauffe mesurée est supérieure ou égale à la valeur cible de surchauffe.

2. Procédé selon la revendication 1 **caractérisé en ce qu'**il est mis en œuvre en réponse à une commande d'activation du dispositif en mode chauffage.

3. Procédé selon l'une des revendications 1 ou 2, **caractérisé en ce qu'**il comprend en outre une étape d'activation d'un ventilateur apte à créer un flux d'air additionnel au niveau de l'échangeur de chaleur disposé en amont du compresseur selon le sens de circulation du fluide réfrigérant associé au mode de fonctionnement activé ; de préférence ; le procédé est mis en œuvre en réponse à une commande d'activation du dispositif en mode chauffage et le ventilateur activé est un groupe moto-ventilateur disposé au niveau de la face avant du véhicule.

4. Procédé selon la revendication 3 **caractérisé en ce que** l'étape d'activation d'un ventilateur est réalisée avant l'étape d'activation du compresseur (13) ; et/ou **en ce que** l'étape d'activation d'un ventilateur est réalisée lorsque le véhicule roule à une vitesse inférieure à une vitesse prédéterminée.

5. Procédé selon l'une des revendications 1 à 4, **caractérisé en ce qu'**en réponse à une commande d'activation du dispositif selon au moins un des modes de fonctionnement, le procédé comprend une mesure préliminaire de la surchauffe du fluide réfrigérant en entrée du compresseur et commande l'étape de fermeture du ou des détendeurs (7, 23) si la valeur de surchauffe est inférieure à la valeur cible de surchauffe.

6. Procédé selon l'une des revendications 1 à 5 **caractérisé en ce que** la valeur cible de surchauffe est d'au moins 4 K, plus préférablement égale ou supérieure à 5 K.

7. Procédé selon l'une des revendications 1 à 6, **caractérisé en ce qu'**il est mis en œuvre en réponse à une commande d'activation du dispositif selon au moins un des modes de fonctionnement si ladite commande d'activation correspond à un changement de mode de fonctionnement depuis le mode refroidissement vers le mode chauffage.

8. Véhicule automobile **caractérisé en ce qu'**il comprend un dispositif de climatisation réversible (1) configuré pour fonctionner alternativement selon un mode refroidissement dans lequel un fluide réfrigérant circule selon un sens donné dans un sous-circuit de refroidissement ou selon un mode chauffage dans lequel un fluide réfrigérant circule en sens inverse et dans un sous-circuit de chauffage, le dispositif (1) comprenant un échangeur de chaleur extérieur (3), un échangeur de chaleur intérieur (9), au moins un compresseur (13) et au moins un détendeur (7, 23) monté entre l'échangeur de chaleur extérieur (3) et l'échangeur de chaleur intérieur (9); et **en ce qu'**il comprend en outre une unité de contrôle électronique associée audit dispositif (1) et configurée pour mettre en œuvre le procédé selon l'une des revendications 1 à 7.

9. Véhicule selon la revendication 8, **caractérisé en ce que** le dispositif de climatisation réversible (1) comprend un réservoir (5) d'accumulation pour fluide réfrigérant disposé entre le ou un des détendeurs (7, 23) et l'échangeur de chaleur extérieur (3) ; de préférence, le dispositif comprend deux détendeurs (7, 23) montés en parallèle entre l'échangeur de chaleur extérieur (3) et l'échangeur de chaleur intérieur (9) ; un premier détendeur (7) étant agencé pour être utilisé lorsque le dispositif fonctionne en mode refroidissement et un deuxième détendeur (23) étant agencé pour être utilisé lorsque le dispositif fonctionne en mode chauffage; et **en ce que** le dispositif (1) comprend un réservoir (5) disposé entre le premier détendeur (7) et l'échangeur de chaleur extérieur (3)

10. Véhicule selon la revendication 8 ou 9, **caractérisé en ce que** le dispositif de climatisation réversible comprend un compresseur unique associé à quatre canalisations chacune étant pourvue d'une vanne de sorte à définir un sous-circuit de refroidissement et un sous-circuit de chauffage et/ou **en ce qu'**il comprend un détendeur unique pouvant être utilisé dans les deux sens de circulation du fluide réfrigérant et ledit détendeur étant commun au sous-circuit de chauffage et au sous-circuit de refroidissement.

## Patentansprüche

1. Verfahren zum Betreiben einer umkehrbaren Klimaanlage (1) für ein Kraftfahrzeug, wobei die Vorrichtung so konfiguriert ist, dass sie abwechselnd in einem Kühlmodus arbeitet, in dem ein Kühlmedium in einer bestimmten Richtung in einem Kühlunterkreis oder in einem Heizmodus zirkuliert, in dem ein Kühlmedium in einer entgegengesetzten Richtung und in einem Heizunterkreis zirkuliert, wobei die Vorrichtung (1) einen äußeren Wärmetauscher (3), einen inneren Wärmetauscher (9), mindestens einen Kompressor (13) und mindestens ein Druckminderventil (7, 23) umfasst, das zwischen dem äußeren Wärmetauscher (3) und Innenwärmetauscher (9); wobei das Verfahren **dadurch gekennzeichnet ist, dass** es als Reaktion auf einen Befehl zum Aktivieren der Vorrichtung in mindestens einer der Betriebsarten die folgenden Schritte umfasst: einen Schritt zum Aktivieren des Kompressors (13); einen Schritt zum Schließen des oder der Expansionsventile (7, 23); und einen Schritt zum Messen der Überhitzung des Kühlmittels am Einlass des Kompressors und Vergleichen des gemessenen Wertes mit einem Überhitzungs-Zielwert und Öffnen des mindestens einen Expansionsventils, wenn der gemessene Überhitzungswert größer oder gleich dem Überhitzungs-Zielwert ist.

2. Verfahren nach Anspruch 1, **dadurch gekennzeichnet, dass** es in Reaktion auf einen Befehl zur Aktivierung der Vorrichtung im Heizmodus durchgeführt wird.

3. Verfahren nach einem der Ansprüche 1 oder 2, **dadurch gekennzeichnet, dass** es ferner einen Schritt des Aktivierens eines Ventilators umfasst, der geeignet ist, einen zusätzlichen Luftstrom an dem Wärmetauscher zu erzeugen, der stromaufwärts des Kompressors gemäß der Strömungsrichtung des Kühlmittels angeordnet ist, das mit dem aktivierten Betriebsmodus verbunden ist; vorzugsweise wird das Verfahren in Reaktion auf einen Befehl zum Aktivieren der Vorrichtung in dem Heizmodus durchgeführt, und der aktivierte Ventilator ist eine Gebläsegruppe, die an der Vorderseite des Fahrzeugs angeordnet ist.

4. Verfahren nach Anspruch 3, **dadurch gekennzeichnet, dass** der Schritt des Aktivierens eines Gebläses vor dem Schritt des Aktivierens des Verdichters (13) durchgeführt wird; und/oder dass der Schritt des Aktivierens eines Gebläses durchgeführt wird, wenn das Fahrzeug mit einer Geschwindigkeit unterhalb einer vorbestimmten Geschwindigkeit fährt.

5. Verfahren nach einem der Ansprüche 1 bis 4, **dadurch gekennzeichnet, dass** das Verfahren als Reaktion auf einen Befehl zum Aktivieren der Vorrichtung gemäß mindestens einer der Betriebsarten eine vorläufige Messung der Überhitzung des Kühlmittels am Einlass des Kompressors umfasst und den Schritt des Schließens des oder der Expansionsventile (7, 23) steuert, wenn der Überhitzungswert kleiner als der Überhitzungszielwert ist.

6. Verfahren nach einem der Ansprüche 1 bis 5, **dadurch gekennzeichnet, dass** der Überhitzungs-Zielwert mindestens 4 K, mehr bevorzugt gleich oder größer als 5 K, beträgt.

7. Verfahren nach einem der Ansprüche 1 bis 6, **dadurch gekennzeichnet, dass** es in Reaktion auf einen Befehl zur Aktivierung der Vorrichtung gemäß mindestens einer der Betriebsarten durchgeführt wird, wenn der genannte Aktivierungsbefehl einer Änderung der Betriebsart von der Kühlbetriebsart in die Heizbetriebsart entspricht.

8. Kraftfahrzeug, **dadurch gekennzeichnet, dass** es eine umkehrbare Klimaanlage (1) umfasst, die so konfiguriert ist, dass sie abwechselnd in einem Kühlmodus arbeitet, in dem ein Kühlmedium in einer bestimmten Richtung in einem Kühlunterkreis oder in einem Heizmodus zirkuliert, in dem ein Kühlmedium in einer entgegengesetzten Richtung und in einem Heizunterkreis zirkuliert, wobei die Vorrichtung (1) einen äußeren Wärmetauscher (3), einen inneren Wärmetauscher (9), mindestens einen Kompressor (13) und mindestens ein Druckminderventil (7, 23) umfasst, das zwischen dem äußeren Wärmetauscher (3) und dem Wärmetauscher angebracht ist Innenwärme (9); und ferner umfassend eine elektronische Steuereinheit, die der Vorrichtung (1) zugeordnet und konfiguriert ist, um das Verfahren nach einem der Ansprüche 1 bis 7 auszuführen.

9. Fahrzeug nach Anspruch 8, **dadurch gekennzeichnet, dass** die umkehrbare Klimaanlage (1) einen Kühlmittelspeicherbehälter (5) aufweist, der zwischen dem oder einem der Expansionsventile (7, 23) und dem Außenwärmetauscher (3) angeordnet ist; wobei die Vorrichtung vorzugsweise zwei Expansionsventile (7, 23) aufweist, die parallel zwischen dem Außenwärmetauscher (3) und dem Innenwärmetauscher (9) angeordnet sind; wobei ein erstes Expansionsventil (7) angeordnet ist, um im Kühlbetrieb der Vorrichtung verwendet zu werden, und ein zweites Expansionsventil (23) angeordnet ist Zur Verwendung im Heizbetrieb, **dadurch gekennzeichnet, dass** die Vorrichtung (1) einen Behälter (5) umfasst, der zwischen dem ersten Expansionsventil (7) und dem äußeren Wärmetauscher (3) angeordnet ist

10. Fahrzeug nach Anspruch 8 oder 9, **dadurch gekennzeichnet, dass** die umkehrbare Klimaanlage einen einzigen Kompressor umfasst, der vier Rohrleitungen zugeordnet ist, die jeweils mit einem Ventil versehen sind, um einen Kühlunterkreis und einen Heizunterkreis zu definieren, und/oder dass sie einen einzigen Expansionsventil umfasst, der in beiden Strömungsrichtungen des Kühlmittels verwendet werden kann, und dass der Expansionsventil dem Heizunterkreis und dem Kühlunterkreis gemeinsam ist.

## Claims

1. Method of managing a reversible air conditioning system device (1) for a motor vehicle, the device being configured to operate alternately in a cooling mode in which a refrigerant circulates in a given direction in a cooling sub-circuit or in a heating mode in which a refrigerant circulates in a reverse direction and in a heating sub-circuit, the device (1) comprising an exterior heat exchanger (3), an interior heat exchanger (9), at least one compressor (13) and at least one pressure reducer (7, 23) mounted between the exterior heat exchanger (3) and the interior heat exchanger (9); the method being **characterised in that** in response to an activation order of the device in at least one of the operating modes, it comprises the steps of: an activation step of the compressor a step of closing the compressor steps of the compressor the steps of the steps of the steps of the steps of the steps of the steps of the device; pressure reducers (7, 23); and a step of measuring the overheating of the refrigerant at the entry of the compressor and comparing the measured value with a target overheating value and opening said at least one pressure reducer when the measured overheating value is greater than or equal to the target overheating value.

2. Method according to claim 1, wherein it is implemented in response to an activation order of the device in heating mode.

3. Method according to either of Claims 1 and 2, further comprising a step of activation of a fan capable of generating an additional air flow at the level of the heat exchanger arranged upstream to the compressor according to the direction of circulation of the refrigerant associated with the activated operating mode; preferably; the method is implemented in response to an activation order of the device in heating mode and the activated fan is a motor-driven fan unit arranged at the level of the front face of the vehicle.

4. Method according to Claim 3, wherein the step of activation of a fan is realised before the step of activation of the compressor (13); and/or wherein the step of activation of a fan is realised when the vehicle is travelling at a speed lower than a predetermined speed.

5. Method according to one of Claims 1 to 4, **characterised in that**, in response to an activation order of the device according to at least one of the operating modes, the method comprises a preliminary measurement of the overheating of the refrigerant fluid at the entry of the compressor and orders the step of closing the pressure reducer or reducers (7, 23) if the overheating value is lower than the target overheating value.

6. Process according to one of Claims 1 to 5, **characterised in that** the target value of overheating is at least 4 K, more preferably equal to or greater than 5 K.

7. Method according to one of Claims 1 to 6, **characterised in that** it is implemented in response to an activation order of the device according to at least one of the operating modes if said activation order corresponds to a change in operating mode from the cooling mode to the heating mode.

8. Motor vehicle comprising a reversible air conditioning system device (1) configured to operate alternately according to a cooling mode in which a refrigerant circulates according to a given direction in a cooling subcircuit or according to a heating mode in which a refrigerant circulates in reverse direction and in a heating subcircuit, the device (1) comprising an exterior heat exchanger (3), an interior heat exchanger (9), at least one compressor (13) and at least one pressure reducer (7, 23) mounted between the exterior heat exchanger (3) and the interior heat exchanger (9); and in that it further comprises an electronic control unit associated with said device (1) and configured to implement the method according to one of Claims 1 to 7.

9. Vehicle according to Claim 8, wherein the reversible air conditioning system device (1) comprises an accumulation tank (5) for refrigerant fluid arranged between the one or more pressure regulators (7, 23) and the outer heat exchanger (3); preferably, the device comprises two pressure regulators (7, 23) mounted in parallel between the outer heat exchanger (3) and the inner heat exchanger (9); a first pressure regulator (7) being arranged to be used when the device is operating in cooling mode and a second pressure regulator (23) being arranged to be used when the device is operating in heating mode; and wherein the device (1) comprises a tank (5) arranged between the first pressure regulator (7) and the outer heat exchanger (3)

10. Vehicle according to Claim 8 or 9, wherein the reversible air conditioning system device comprises a single compressor associated with four pipes each being provided with a valve so as to define a cooling subcircuit and a heating subcircuit and/or wherein it comprises a single pressure reducer which can be used in the two directions of circulation of the refrigerant fluid and said pressure reducer being common to the heating subcircuit and to the cooling subcircuit.
